# EUROPEAN PATENT APPLICATION

(11) **EP 2 151 171 A1**
(43) Date of publication of application: **10.02.2010**
(21) Application number: 08104974.4
(22) Date of filing: 06.08.2008
(51) Int. Cl.: A45C 5/00, C09K 5/18, A45C 13/02

(54) **Kit for providing on-demand dry, wet or warm wet wipes**

(71) Applicant: The Procter and Gamble Company, Cincinnati, Ohio 45202 (US)
(72) Inventor: Mueller, Joerg Andreas, 65812, Bad Soden (DE); Glaser, Ursula, 65203, Wiesbaden (DE); Auzenau, Alain, 65824, Schwalbach (DE)
(74) Representative: Heide, Ute

(57) **Abstract**

A kit for providing on-demand either a dry wipe, a wet wipe or a warm wet wipe is provided. The kit comprises a first container having dry wipes disposed therein, a second container having a heat-generating composition disposed therein and a third container having a cleaning composition disposed therein.

## Description

### FIELD OF THE INVENTION

The invention relates generally to disposable cleaning wipes. Specifically, the invention is directed to a kit enabling the user to have on-demand either a dry wipe, a wet wipe or a warm wet wipe.

### BACKGROUND OF THE INVENTION

Disposable cleansing wipes for personal cleansing are known in the art and are used by consumers for a variety of reason. Typically, disposable cleansing wipes comprise a fibrous or film-like substrate. Depending on the use for which the wipes are intended, the wipes may come in wet or dry forms. For examples, wipes may include compositions to aid in a particular cleaning process. For example, wipes which are intended to be used for cleaning babies or young children may include a mild detergent composition, sanitizing agent, and/or moisturizing agent, those compositions aiding in the cleaning process. Nowadays, more and more new benefits are offered to consumers in order to meet their needs. For instance, wipes impregnated with a specific lotion preserving the hydration of the skin or wipes delivering a soothing or protective lotion to the skin are available. The release of the uncomfortable or undesirable cool to the touch that may be felt when a wet wipe contacts the skin of a user and especially the relatively sensitive skin of a baby or a young child, is one of the new benefits provided to consumers, in the form of so called "warm wipes". A variety of warm wipes is known from literature, for example EP 1 310 186B1, WO 2005/068916, WO 2006/071319, WO 2007/138498. Those wipes release heat to the external environment as the result of an exothermic chemical reaction. For instance, dry wipes may include, within their fibrous structure, compounds which will react exothermically when combined with water. In an alternative way of providing warm wipes, wet wipes may be impregnated at the point of dispensing with a composition that will react exothermically upon contact with the wet wipes.

A plethora of wipes is available on the market to meet various needs of consumers. However, none of the available products enables users to tailor the wipes on-demand to the intended use and so to their needs. Indeed, especially in situations such as away from home, having at disposal the right wipes would imply carrying and storing several products, for example containers for each type of wipes that might be needed, such as a container for dry wipes, a container for wet wipes, a container for warm wipes. Hence, there is a need for an article of commerce that would enable consumers to tailor easily, conveniently and on-demand wipes to the intended use in order to meet their needs.

It is hence an object of the present invention to provide a kit enabling users to tailor easily and on-demand wipes to meet their various needs.

### SUMMARY OF THE INVENTION

The present invention provides a kit for providing on-demand either a dry wipe, a wet wipe or a warm wet wipe. The kit comprises:
(a) a first container having at least one dry wipe disposed therein, said first container being adapted to store and dispense the dry wipe
(b) a second container having a heat-generating composition comprising at least one heating agent disposed therein, said second container being adapted to store and dispense the heat-generating composition
(c) a third container having a cleaning composition disposed therein, said third container being adapted to store and dispense the cleaning composition, said cleaning composition reacting exothermically upon contact with said heat-generating composition.

In one embodiment, the kit of the present invention further comprises a set of instructions for communicating to a consumer that the kit provides on-demand either:
- dry wipes by pulling out wipes from the first container, and/or
- wet wipes by dispensing the cleaning composition from the third container onto the dry wipes from the first container, and/or
- warm wet wipes by dispensing the cleaning composition from the third container and the heat-generating composition from the second container onto the dry wipes from the first container

### BRIEF DESCRIPTION OF THE DRAWINGS

Figure 1 is a view of one embodiment of a kit according to the present invention comprising a set of instructions.
Figure 2 is a view of another embodiment of a kit according to the present invention wherein the containers are held in assembly.
Figure 3 is a view of one embodiment of a kit according to the present invention comprising a fourth container.

### DETAILED DESCRIPTION OF THE INVENTION

As used herein the term "nonwoven" refers to a fibrous structure made from an assembly of continuous fibers, coextruded fibers, noncontinuous fibers or combinations thereof, without weaving or knitting. Non-limiting examples of suitable processes for making a nonwoven include spunbonding, carding, meltblowing, air laying, wet laying, coform, and the like. The nonwoven structure may comprise one or more layers of such fibrous assemblies, wherein each layer may include continuous fibers, coextruded fibers, noncontinuous fibers and combinations thereof.

As used herein, the term "chemical reaction" generally refers to a chemical transformation or change resulting from the interaction of chemical entities.

As used herein the term "exothermic reaction" generally refers to a chemical reaction that releases heat to the external environment.

As used herein, the term "heat generating composition" refers to a composition comprising at least one heating agent.

As used herein, the term "heating agent" generally refers to an element of a heat-generating composition that undergoes a chemical reaction when it is combined with a co-reactant, resulting in the evolution of heat energy (i.e., an exothermic reaction). Non-limiting examples of suitable heating agents are provided in more detail herein below.

As used herein, the term "wet wipe" refers to a dry wipe impregnated with the cleaning composition of the kit of the present invention.

As used herein, the term "warm wet wipe" refers to a dry wipe impregnated with both the cleaning composition and the heat-generating composition of the kit of the present invention.

### KIT

The kit for providing on-demand either a dry wipe, a wet wipe or a warm wet wipe comprises:
(d) a first container having at least one dry wipe disposed therein, said first container being adapted to store and dispense the dry wipe
(e) a second container having a heat-generating composition comprising at least one heating agent disposed therein, said second container being adapted to store and dispense the heat-generating composition
(f) a third container having a cleaning composition disposed therein, said third container being adapted to store and dispense the cleaning composition, said cleaning composition reacting exothermically upon contact with said heat-generating composition.

The kit of the present invention is particularly suitable for use in the context of baby or child care, such as during a diaper change process. However, as it will be understood at the reading of the present disclosure, it can also be used in any situations where dry wipes, wet wipes or warm wet wipes might be desired.

### The first container for storing and dispensing dry wipes

The kit according to the present invention comprises a first container having at least one dry wipe disposed therein, typically a plurality of dry wipes (e.g. 2 to 100). The first container is adapted to store and dispense dry wipes. The dry wipes described herein may comprise a fibrous nonwoven web. The fibers for making the web may include natural fibers, such as, for example fibers from wood pulp, starch, plant sources, and animal sources. The fibers may also include synthetic fibers, such as, for example fibers made from polyesters, polyolefins, polyethers, polyamides, polyesteramides, polyvinylalcohols, polyhydroxyalkanoates, and polysaccharides. The fibers may also include a combination of natural and synthetic fibers in any proportion, as desired. However, it is to be understood that in certain embodiments it may be desirable to have particular combinations of fibers to provide desired characteristics. For example, it may be desirable to have fibers of certain lengths, widths, coarseness or other characteristics combined in certain layers or separate from each other. The fibers may be of virtually any size and may have an average length from 1 mm to 60 mm. Average fiber length refers to the length of the individual fibers if straightened out. The fibers may have an average fiber width of greater than 5 micrometers. Suitable examples of fibers and fibrous webs are described in copending

U.S. Patent Application No. 11/796,984, filed by Sawin, et al., on April 30, 2007. The dry wipes may also be woven or partly woven substrate.

The container for storing the dry wipes is configured to enable the dispensing of the wipes. Typically, a container has at least one opening that enables a user to access the wipes. The container may be of any shape known to the skilled person. Typically, the container may be rectangular, square, cylindrical and may be made of flexible or solid material. The container may also include a lid or other means to substantially cover the opening of the container. The container may comprise an opening to enable the consumer to refill it. The container may be adapted for a single use (e.g., the container is manufactured containing a predetermined number of wipes, which are not intended to be replaced after use) or the container may be reusable (e.g., the container may be adapted for storing a replaceable cartridge of wipes). Within the container, the wipes may be independently folded and stacked in a pile of pre-cut wipes or they may be provided in the form of a roll of wipes with lines of weakness for an easier dispensing of individual wipes.

The dry wipes comprised in the first container of the present kit may be advantageously used as a drying wipe suitable for instance to aid in the removal of water or any liquid or solid substances from the skin or from any surfaces.

### The second container for storing and dispensing the heat-generating composition

The kit according to the present invention comprises a second container having a heat-generating composition comprising at least one heating agent disposed therein. The second container is adapted to store and dispense the heat-generating composition. The container may be any containers known to the skilled man of the art. It may be of any forms such as cylindrical, rectangular, square and may be made of flexible or solid material. Suitably, the container may be selected from the group consisting of spray bottles, pump-dispensers, foaming pump-dispensers, sticks, roll-on dispensers, tubes, bottles, combinations thereof. Preferably, the container is mounted with a manually operated actuator.

The heat-generating composition is stored in the storage space of the container. The composition may be disposed directly within the container which may be conceived to be refillable or replaced once empty. For instance, the container may have a removable closure permitting to refill the container once the composition has been exhausted.

The heat-generating composition for use with kit of the present invention includes at least one heating agent or a mixture of heating agents and may include one or more adjunct ingredients. The heat-generating composition may be configured as a liquid solution, however, it is to be understood that the heat-generating composition may also be configured as a solid, semi-solid or a gas, as desired. For example, the heat-generating composition may be a material that is a solid at room temperature, but has a low melting point.

The at least one heating agent comprised in the heat-generating composition is selected such that the heat-generating composition will release heat upon contact with the cleaning composition. Suitable heating agents include agents having an exothermic heat of reaction, such as, for example agent demonstrating an exothermic heat of hydration when reacted with an aqueous solution. Examples of suitable heating agents include, without limitation, salts of calcium, magnesium, aluminum, sodium, and potassium; zeolites; metals; slaked lime; quick lime; glycols; and combinations thereof. Particularly suitable examples of heating agents include anhydrous salts of magnesium chloride, calcium chloride and/or magnesium sulphate. Exothermic reactions involving anhydrous salts and an aqueous solution may be exemplified, however, it is to be understood that any suitable exothermic chemical reaction is contemplated herein. In one embodiment, two or more heating agents may be comprised in the heat-generating composition that act individually or cooperatively to produce heat, for example through an exothermic chemical reaction with one or more ingredients of a cleaning composition.

The heating agent may be provided in the heat-generating composition in any suitable concentration. For example the heat-generating composition may comprise from 0.001% to less than 50% of a heating agent or mixtures theoreof; from 0.01% to less than 25%; less than 10%; or even less than 1%, by weight of the heat-generating composition. Preferably, the heat-generating composition is anhydrous. By anhydrous, it is meant that the heat-generating composition does not comprise more than 5 % of water, preferably no more than 2% of water and more preferably no more than 0.5% of water.

In addition to a heating agent, the heat-generating composition may include at least one neurosensory agent or a mixture thereof. As used herein, the term "neurosensory agent" refers to ingredients that give a perception of heat when applied to the skin, (i.e., compositions that induce a perception of temperature change without involving an actual change in temperature, such as, for example peppermint oil, eucalyptol, eucalyptus oil, methyl salicylate, camphor, tea tree oil, ketals, carboxamides, cyclohexanol derivatives, cyclohexyl derivatives, and the like). A suitable neurosensory agent may enhance the warming effect perceived by a user of a warm wipe described herein. Suitably, the heat-generating composition may comprise between 0 and 15%, or between 0.001 and 10% or between 0.01 and 1% of neurosensory agents by weight of heat-generating compositions. In one example, a heat-generating composition having a heating agent that comprises magnesium sulphate and a neurosensory agent that comprises methyl salicylate may be provided. In this example, when the heat-generating composition is contacted with an aqueous cleaning composition, the magnesium sulphate chemically reacts with the aqueous cleaning composition to produce an increase in the temperature of the compositions applied to the wipe and the methyl salicylate may produce a sensory perception of heat when the wipe is contacted with the skin of a user.

The heat-generating composition may comprise at least one adjunct ingredient or a mixture thereof. A number of adjunct ingredients are suitable for inclusion in the heat-generating composition, such as, for example, cleansing agents, appearance modifying agents (e.g., exfoliation agents, skin-firming agents, anti-callous agents, anti-acne agents, anti-aging agents, anti-wrinkle agents, anti-dandruff agents, antiperspirant agents, wound care agents, scar repair agents, colorants, humectants, powders, skin coloration agents, tanning agents, lightening agents, brightening agents, and shine control agents), enzymes, nutrients (e.g., anti-oxidants, transdermal drug delivery agents, botanical extracts, vitamins, magnets, foods, and drugs), anti-bacterials, anti-virals, anti-fungals, preservatives, insect repellants, anti-parasite agents, surface conditioning agents (e.g., pH adjusting agents, moisturizers, shaving lubricants, and skin lipids), anti-inflammatory agents (e.g., skin conditioners, external analgesic agents, anti-irritant agents, and anti-allergy agents), and emotional benefit agents (e.g., fragrances, odor neutralizing materials, soothing agents, calming agents) and mixture thereof. Suitably, the heat-generating composition may comprise between 0 and 50%, or between 0.001 and 10% or between 0.01 and 1% of adjunct ingredients by weight of heat-generating composition, depending on function of the adjunct material and desired performance.

The heat-generating composition may include a matrix material for carrying the heating agent and the adjunct ingredient(s), if present. Suitable examples of matrix materials include, without limitation, mineral oil, isopropyl myristate, silicones, copolymers (e.g., block copolymers), waxes, butters, exotic oils, dimethicone, glycols (e.g. ethyleneglycol, propyleneglycol and any polyethyleneglycol), thermoionic gels, plant oils, animal oils, and combinations thereof. Particularly suitable matrix materials are hydrophilic, but anhydrous materials, e.g. polyethyleneglycol's with molecular weight from 200 to 10000, Glycols, Glycerin and the like. Suitable matrix materials include oils commonly used in commercial cosmetic applications that may impart some skin benefit to the user, such as a moisturizing or lubricating benefit. Generally, these oils are hydrophobic oils. The heat-generating composition may comprise any suitable proportion of matrix material, heating agent, and adjunct ingredients. For example, the heat-generating composition may comprise from 1% to 99% of a matrix material, by weight of the heat-generating composition.

In certain embodiments, the heat-generating composition may also include a surfactant or mixture thereof. Any one of a number of surfactant types including anionic, cationic, nonionic, zwitterionic, and combinations thereof may be utilized. One skilled in the art will recognize, based on the disclosure herein, that different heating agents in combination with different matrix materials and adjunct ingredients may benefit from one type of surfactant more than another; that is, the preferred surfactant for one chemistry may be different than the preferred surfactant for another. Particularly desirable surfactants will allow the heat-generating composition to have a suitable viscosity for thorough mixing; that is, the surfactant will not result in the mixture having an undesirably high viscosity. Suitably, the heat-generating composition may comprise between 0 and 50%, or between 0.001 and 10% or between 0.01 and 1% of surfactants by weight of heat-generating compositions. The heat-generating composition may also comprise auxiliary raw materials influencing the physical state of the formulation, e.g. rheology modifiers to induce shear sensitivity, thickeners, and waxes.

The warm wet wipes provided by the kit of the present invention may be advantageously used as a means for instance to release the uncomfortable or undesirable cool to the touch that might otherwise be felt by a user when a conventional wet wipe contacts the skin. In addition or alternatively, the warm wipes may also enhance the cleaning process. Indeed, it is known that at least some cleaning composition provide better cleaning results when the solution is warm. For example, some warm aqueous solutions (e.g., having a temperature greater than 27° C) are known to dissolve certain contaminates better than cold compositions (e.g., having a temperature less than 10° C). The warm wet wipes provided by the kit of the present invention may also enhance the benefits that may be provided by the ingredients comprised in the cleaning composition described herein below. Indeed, the warming effect may for instance enhance the benefits provided by essential oils that may be comprised in the cleaning composition by helping in the diffusion process. In another example, the warming effect may dilate the pores of the skin and thus increase the penetration of the ingredients of the composition in the skin. Warm wet wipes may be used in any application including baby, children or adult post bowel movement cleaning, feminine hygiene wipes, polishing wipes, body cleansing wipes, floor cleaning wipes, dish cleaning wipes.

### The third container for storing and dispensing the cleaning composition

The kit according to the present invention comprises a third container having a cleaning composition disposed therein. The third container is adapted to store and dispense the cleaning composition. The cleaning composition is conceived to react exothermically with the at least one heating agent comprised in the heat-generating composition. The third container may be of same construction as the second container or may be different. The container may be any container known to the skilled man of the art. It may be of any forms such as cylindrical, rectangular, square and may be made of flexible or solid material. Suitably, the container may be selected from the group consisting of spray bottles, pump-dispensers, foaming pump-dispensers, sticks, roll-on dispensers, tubes, bottles, combinations thereof. Preferably, the container is mounted with a manually operated actuator.

The cleaning composition is stored in the storage space of the container. The composition may be disposed directly within the container which may be conceived to be refillable or replaced once empty. For instance, the container may have a removable closure permitting to refill the container once the composition has been exhausted.

The cleaning composition for use with the kit of the present invention may be any liquid composition commonly known in the art to clean or treat various surfaces, such as hard surfaces, inanimate objects, animate surfaces, human body parts, etc. While particular examples may describe the use of the kit in the context of baby or child care such as the use during a diaper changing process, it is believed that the present invention may, in fact, be practiced to great advantage in any situation where wipes exhibiting the described characteristics are required. Suitably, it may be used to clean hands and faces, to apply various care products or pre-treat the skin for subsequent application of skin care products. The wet wipes may be suitably used as baby, children or adult post bowel movement cleaning wipes, feminine hygiene wipes, polishing wipes, body cleansing wipes, floor cleaning wipes, dish cleaning wipes.

In one embodiment, the cleaning composition of the kit of the present invention is a liquid composition. The cleaning composition may be water, an aqueous solution or may be an oil-in-water or water-in-oil emulsion. Suitably, the liquid cleaning composition comprises between 1% and 100%, or between 5% and 100% or between 20% and 100% of water by weight of the cleaning composition. Suitably the cleaning composition reacts exothermically with one or more heating agents comprised in the heat-generating composition upon contact. According to the present invention, the heat-generating composition may be contacted with the cleaning composition to provide an exothermic reaction that heats the wipe, thereby providing a warm wet wipe. The cleaning composition such as a skin care composition or a personal cleaning composition may also be applied alone on the dry wipe to provide a wet wipe.

The cleaning composition may also comprise one or more adjuncts ingredients. A number of adjunct ingredients are suitable for inclusion in the cleaning composition, such as, for example, cleansing agents, appearance modifying agents (e.g., exfoliation agents, skin-firming agents, anti-callous agents, anti-acne agents, anti-aging agents, anti-wrinkle agents, anti-dandruff agents, antiperspirant agents, wound care agents, scar repair agents, colorants, humectants, powders, skin coloration agents, tanning agents, lightening agents, brightening agents, and shine control agents), enzymes, nutrients (e.g., anti-oxidants, transdermal drug delivery agents, botanical extracts, vitamins, foods, and drugs), anti-bacterials, anti-virals, anti-fungals, preservatives, insect repellants, anti-parasite agents, surface conditioning agents (e.g., pH adjusting agents, moisturizers, shaving lubricants, and skin lipids), anti-inflammatory agents (e.g., skin conditioners, external analgesic agents, anti-irritant agents, and anti-allergy agents), emotional benefit agents (e.g., fragrances, odor neutralizing materials, soothing agents, calming agents) or any mixture thereof. Suitably, the cleaning composition may comprise between 0 and 50%, or between 0 and 10% or between 0 and 1% of adjunct ingredients by weight of cleaning compositions. In certain embodiments, the cleaning composition may also include a surfactant or a mixture thereof. Any one of a number of surfactant types including anionic, cationic, nonionic, zwitterionic, and combinations thereof may be utilized. Suitably, the cleaning composition may comprise between 0 and 50%, or between 0.001 and 10% or between 0.01 and 1% of surfactants by weight of cleaning composition. The cleaning composition may also comprise auxiliary raw materials influencing the physical state of the formulation, e.g. rheology modifiers to induce shear sensitivity, thickeners, and/or waxes.

In another embodiment, the cleaning composition may be in a solid or concentrated form. Such cleaning composition may comprise any of the adjunct ingredients and/or surfactants described herein before. Prior to use of the kit, the user is instructed to dilute the solid or concentrated cleaning composition with water, such as tap water, to provide an aqueous cleaning composition.

The wet wipes provided by the kit of the present invention may be advantageously used to clean or treat any surfaces as described previously. They may also be used to refresh the skin of a user.

### Fourth container

The kit of the present invention may comprise a fourth container wherein a user of the kit may dispense the cleaning composition from the third container or the heat-generating composition from the second container and the cleaning composition from the third container and then soaks the dry wipe in this fourth container. The fourth container is adapted to receive the composition(s) once dispensed from its/their container(s) and helps the user to impregnate the dry wipes. The fourth container may be any container known to the skilled man of the art. It may be of any forms such as cylindrical, rectangular, square. Suitably, the fourth container is an open bowl.

The kit of the present invention may be packaged in a common package and sold as a single article of commerce. The first, second and third container may be three physical distinct entities. They may also be conceived to be held in assembly. The first, second and third container may also be commercially marketed together, but packaged and sold separately.

### Set of instructions

The kit according to the present invention may further comprise a set of instructions in association with said package for communicating to a consumer the benefits/results imparted by the combination of the different elements of the kit and also instructions to teach the consumer how to use the different elements of the kit to get the desired benefits.

Indeed a consumer may not immediately know how to appropriately use the dry wipe, the heat-generating composition and the cleaning composition to achieve the optimal results.

Thus, the set of instructions may communicate to a consumer that the kit may provide either dry wipes by pulling out wipes from the first container, wet wipes by dispensing said cleaning composition from the third container onto the dry wipes from the first container and/or warm wet wipes by dispensing said cleaning composition from the third container and said heat-generating composition from the second container onto the dry wipes from the first container. With such a set of instructions, the user may identify how to have easily and on-demand wipes adapted to the desired cleaning task. This might particularly appreciated during the course of a diaper change process. Depending on the matter to be done, e.g. removing traces of urine or removing bowel movements, different wipes might be needed. For example, in a first step of a diaper change, a dry wipe might be useful to remove the excess of bowel movements. In a second step, the user might appreciate to have a warm wet wipe to clean the bottom of the baby and eliminate all the residual traces of urine or bowel movements. A warm wet wipe may be useful to improve the dissolution of certain contaminates. Alternatively, the user might prefer to have a wet wipe to accommodate the external conditions. In a third step, the user may appreciate to have a dry wipe to dry the skin of the baby before placing a new diaper.

The set of instructions may teach a user to dispense the heat-generating composition and/or the cleaning composition directly onto the wipes that are then crumpled in hands or to dispense the heat-generating composition and/or the cleaning composition into a fourth container such as a bowl that may be provided with the kit and to soak the wipes in the fourth container. The set of instructions according to the present invention may be in any form. Suitably, the set of instruction is in the form of text, graphics, charts, visuals cues, other indicia or combination thereof.

The second and/or third container may be adapted to be actuated by the user (e.g., manually operated pump or trigger type sprayer), such that a predetermined amount of the heat-generating composition and/or a predetermined amount of cleaning composition are dispensed with each actuation of the pump or of the sprayer. Indeed, it may be desirable to adapt one or more elements of the kit to increase the control that a user has over the warming process or over the wetting process. In an example, the second container may be selected and adapted to provide a suitable amount of control over the amount of heat-generating composition dispensed from the second container. For instance, the second container may be adapted to be actuated by the user such as a predetermined amount of heat-generating composition is dispensed with each actuation of the second container. This may result in a suitable amount of control over the amount of temperature change of the wipe and in a relationship between the number of actuations and the temperature increase of the wipe. In another example, the third container may be selected and adapted to provide a suitable control over the amount of cleaning composition dispensed from the third container. For instance, the third container may be adapted to be actuated by the user such as a predetermined amount of cleaning composition is dispensed with each actuation of the third container. This may result in a suitable amount of control over the wetness of the wipe and in a relationship between the number of actuations and the wetness of the wipe. In another example, both the second and third container may be selected and adapted to provide a suitable control over the amount of compositions dispensed there from. The relationship between the number of actuations and the temperature increase of the wipe and/or the relationship between the number of actuations and the wetness of the wipe may be communicate to a consumer. In one embodiment, the kit of the present invention comprises a set of instructions for communicating to a consumer a relationship between the number of actuations of the third container and the wetness of the wipes after the cleaning composition has been applied to the dry wipes and/or for communicating to a consumer a relationship between the number of actuations of the second container and a temperature increase of the wipes after said heat-generating composition and cleaning composition have been applied to the dry wipes. The set of instructions may be in any forms. Typically, the set of instruction is in the form of text, graphics, charts, visuals cues, other indicia or combination thereof. Those set of instructions may provide a consumer with more usage flexibility and control over the amount of heat-generating composition applied to the wipe and the wet-wipe temperature attained than if the heating agent were pre-applied to the wet-wipe, i.e., applied during manufacturing or prior to purchase by a consumer. Alternatively or additionally, a user may be able to control the time that the wet-wipe remains at a particular temperature by re-applying the heat-generating composition to the wipe when the temperature of the wipe becomes undesirably low. In addition, a manufacturer may be able to communicate to a consumer, in quantitative or qualitative terms, the rate or amount of temperature change on a wet-wipe for a particular number of actuations over a particular amount of time.

The set of instructions may be either directly printed on the common package of the kit and/or on either the dry-wipes container, the heat-generating composition container and/or the cleaning composition container. Alternatively or in addition, the set of instruction is presented in a separated manner including, but not limited to, a brochure, printed advertisement, so as to communicate the set of instructions to a consumer. The first, second and third containers may include the same or similar set of instructions in the form of text, graphics, visuals cues or combination thereof. The three containers may also include different indicia that act cooperatively to communicate to a consumer that the dry wipes, the heat-generating composition and the cleaning composition, when used together, provide different benefits.

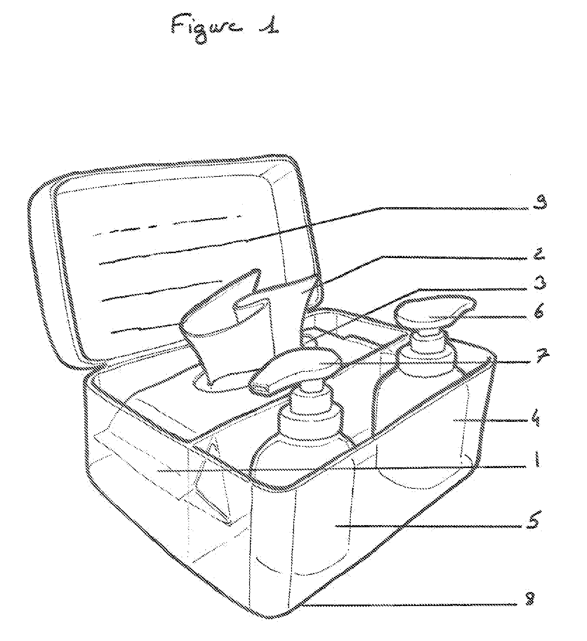

With reference to figure 1, one embodiment of a kit providing on-demand either a dry wipe, a wet wipe and/or a warm wet wipe is illustrated. The kit comprises a first container (1) for storing and dispensing the dry wipes (2). The first container is made of a generally rectangular-shaped tub having a front panel, a back panel, opposite side panels and a bottom panel defining the internal compartment of the container. The container comprises one opening (3) to enable the user to access the wipes. The kit comprises a second container (4) for storing the heat-generating composition and a third container (5) for storing the cleaning composition. Dispensing means such as manually operated pumps are mounted on the containers (6, 7). The three containers are package in a common package (8). A set of instructions (9) is provided on the package for communicating to a consumer the benefits imparted by the kit and also to teach the consumer how to use the different elements of the kit.

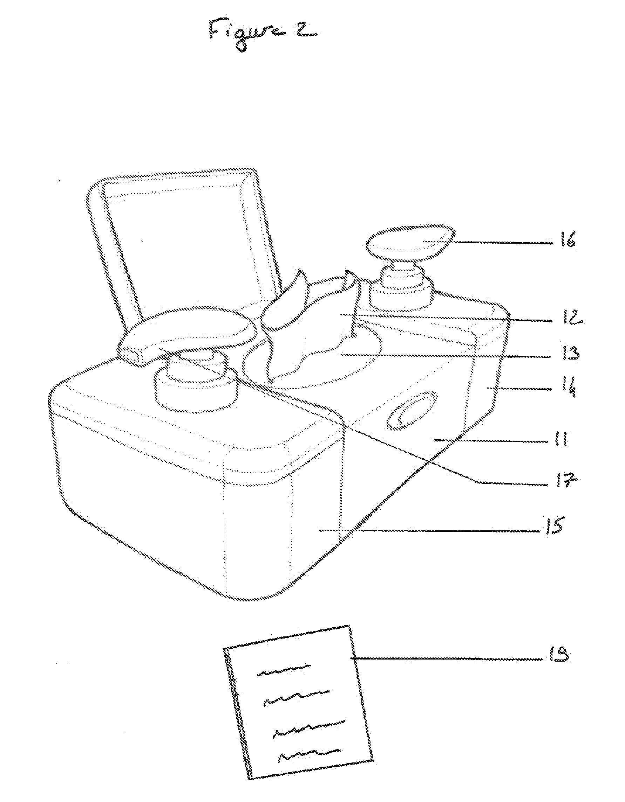

With reference to figure 2, another embodiment of a kit providing on-demand either a dry wipe, a wet wipe and/or a warm wet wipe is illustrated. The kit comprises a first container (11) for storing and dispensing the dry wipes (12). The first container is made of a generally rectangular-shaped tub having a front panel, a back panel, opposite side panels and a bottom panel defining the internal compartment of the container. The container comprises one opening (13) to enable the user to access the wipes. The kit comprises a second container (14) for storing the heat-generating composition and a third container (15) for storing the cleaning composition. Dispensing means such as manually operated pumps are mounted on the containers (16, 17). A set of instructions (19) is provided as a brochure for communicating to a consumer the benefits imparted by the kit and also to teach the consumer how to use the different elements of the kit. In the embodiment of figure 2, the first container (11), the second container (14) and the third container (15) are held in assembly.

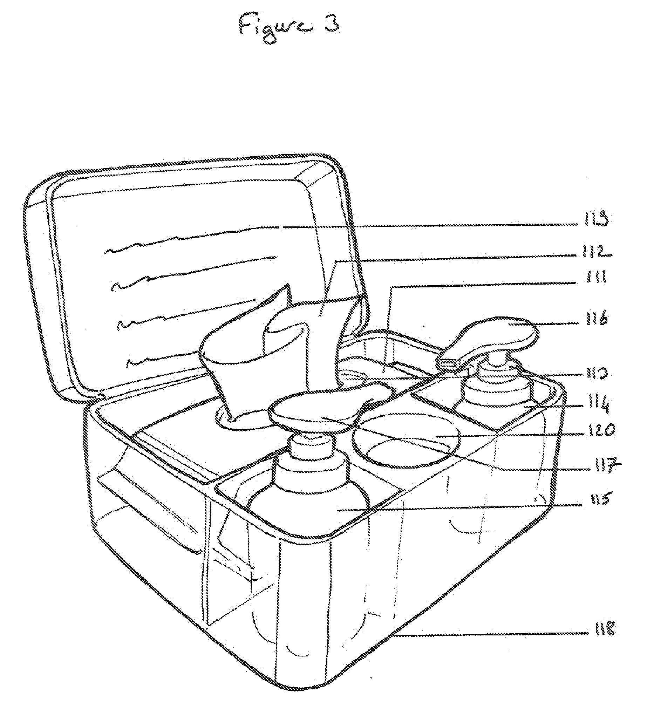

With reference to figure 3, another embodiment of a kit providing on-demand either a dry wipe, a wet wipe and/or a warm wet wipe is illustrated. The kit comprises a first container (111) for storing and dispensing the dry wipes (112). The first container is made of a generally rectangular-shaped tub having a front panel, a back panel, opposite side panels and a bottom panel defining the internal compartment of the container. The container comprises one opening (113) to enable the user to access the wipes. The kit comprises a second container (114) for storing the heat-generating composition and a third container (115) for storing the cleaning composition. Dispensing means such as manually operated pumps are mounted on the containers (116, 117). The kit comprises a fourth container (120) (e.g. an open bowl) adapted to receive the composition(s) once dispensed from their container(s) and enabling the soaking of the wipe. The four containers are packaged in a commom package (118). A set of instructions (119) is provided on the package for communicating to a consumer the benefits imparted by the kit and also to teach the consumer how to use the different elements of the kit.

### Examples

A representative example of a heat-generating composition according to the present invention is given as example A below.

### Example A:

| Component | Amount (% by weight) |
|---|---|
| (1) Magnesium sulfate anhydrous | 15 |
| (2) Glyceryl Monostearate | 2 |
| (3) PEG-4 | Balance |
| Total | 100 |

A representative example of a cleaning composition according to the present invention is given as Example B below.

### Example B:

| Component | Amount (% by weight) |
|---|---|
| (1) Disodium EDTA | 0.10 |
| (2) Arlatone-V 175 ™ * | 0.80 |
| (3) Decylglycoside | 0.05 |
| (4) Cyclopentasiloxane Dimethiconol | 0.45 |
| (5) 1,2-Propyleneglycol | 1.50 |
| (6) Phenoxyethanol | 0.80 |
| (7) Methylparaben | 0.15 |
| (8) Propylparaben | 0.05 |
| (9) Ethylparaben | 0.05 |
| (10) PEG-40 Hydrogenated Castor Oil | 0.80 |
| (11) Perfume | 0.05 |
| (12) Purified water | Balance |
| Total | 100 |

| | |
|---|---|
| * Arlatone-V 175 ™ comprises sucrose palmitate, glyceryl stearate, glyceryl stearate citrate, sucrose, mannan, xanthan gum and is commercialized by Uniqema GmbH&Co. KG 46429 Emmerich, Germany, www.uniqema.com. | |

Representative example of wipes according to the present invention is given below.

The dry wipes are made of a carded nonwoven comprising a 40/60 blend of viscose fibers and polypropylene fibers having a basis weight of 58 grams/m2 as available from Suominen of Tampere, Finland as FIBRELLA 3160.

## Claims

1. A kit for providing on-demand either a dry wipe, a wet wipe or a warm wet wipe **characterized in that** said kit comprises:
(a) a first container having at least one dry wipe disposed therein, said first container being adapted to store and dispense the dry wipe
(b) a second container having a heat-generating composition comprising at least one heating agent disposed therein, said second container being adapted to store and dispense the heat-generating composition
(c) a third container having a cleaning composition disposed therein, said third container being adapted to store and dispense the cleaning composition said cleaning composition reacting exothermically upon contact with said heat-generating composition.

2. The kit according to claim 1 wherein the first, second and third container are packaged in a common package or held in assembly.

3. The kit according to any of the preceding claims wherein the kit further comprises a set of instructions for communicating to a consumer that said kit provides either dry wipes by pulling out wipes from the first container, or wet wipes by dispensing said cleaning composition from the third container onto the dry wipes from the first container and/or warm wet wipes by dispensing said cleaning composition from the third container and said heat-generating composition from the second container onto the dry wipes from the first container.

4. The kit according to claim 3 wherein the set of instructions is in the form of a text, graphics, charts, visuals cues, other indicia or combination thereof.

5. The kit according to any of the preceding claims wherein the second and/or third containers are selected from the group consisting of spray bottles, pump-dispensers, foaming pump-dispensers, sticks, roll-on dispensers, tubes, bottles, combinations thereof.

6. The kit according to claim 5 wherein the second and/or third container are adapted to be actuated by the user, such that a predetermined amount of the heat-generating composition and/or a predetermined amount of cleaning composition are dispensed with each actuation.

7. The kit according to claim 6 wherein the kit comprises a set of instructions for communicating to a consumer a relationship between the number of actuations of the third container and the wetness of the wipes after the cleaning composition has been applied to the dry wipes.

8. The kit according to claims 6 and 7 wherein the kit comprises a set of instructions for communicating to a consumer a relationship between the number of actuations of the second container and a temperature increase of the wipes after said heat-generating compositions and cleaning composition have been applied to the dry wipes.

9. The kit according to claim 7 and 8 wherein the set of instructions is in the form of text, graphics, charts, visuals cues, other indicia or combination thereof.

10. The kit according to any of the preceding claims wherein said kit comprises a fourth container adapted to receive the composition(s) once dispensed from its/their container(s) and help the user to impregnate the dry wipes.

11. The kit according to any of the preceding claims wherein the heat-generating composition is anhydrous.

12. The kit according to any of the preceding claims wherein the at least one heating agent is selected from the group consisting of salts of calcium, magnesium, aluminum, sodium, and potassium; zeolites; metals; slaked lime; quick lime; glycols; and combinations thereof.

13. The kit according to any of the preceding claims wherein the cleaning composition is in a liquid, solid or concentrated form.
